# FASCICULE DE BREVET EUROPEEN

(11) **EP 1 678 964 B1**
(45) Date de publication et mention de la délivrance du brevet: **04.04.2007**
(21) Numéro de dépôt: 04805258.3
(22) Date de dépôt: 21.10.2004
(51) Int. Cl.: H04Q 7/22, H04L 29/06

(54) **PROCEDE ET DISPOSITIF D'AUTHENTIFICATION DANS UN RESEAU DE TELECOMMUNICATION UTILISANT UN EQUIPEMENT PORTABLE**
AUTHENTIFIKATIONSVERFAHREN UND -EINRICHTUNG IN EINEM TELEKOMMUNIKATIONSNETZ MIT EINER TRAGBAREN EINRICHTUNG
AUTHENTICATION METHOD AND DEVICE IN A TELECOMMUNICATION NETWORK USING A PORTABLE DEVICE

(30) Priorité: 21.10.2003 FR 0312284
(43) Date de publication de la demande: 12.07.2006
(73) Titulaire: Customer Product Relationship Management, 78860 Saint Nom la Breteche (FR)
(72) Inventeur: EONNET, Yves, F-78860 Saint Nom La Breteche (FR)
(74) Mandataire: Delumeau, François Guy
(86) Numéro de dépôt international: PCT/FR2004/002694
(87) Numéro de publication internationale: WO 2005/041473

(56) Documents cités:
- EP-A- 0 996 300
- EP-A- 1 280 368
- US-A1- 2003 159 068

## Description

La présente invention concerne un procédé et un dispositif d'authentification dans un réseau de télécommunication.

Plus précisément, la présente invention permet, de façon non limitative, d'authentifier un utilisateur désirant accéder à l'Intranet d'une entreprise à partir d'un terminal distant.

A cet effet, on connaît déjà divers systèmes d'authentification, et notamment le système connu sous le nom de "loging password", dans lequel la personne désirant s'authentifier est invitée à saisir un identifiant (nom, prénom, ...) et un code secret.

Cette technique, lourde à gérer, est reconnue comme très fragile d'un point de vue sécuritaire. En effet, les responsables des systèmes de sécurité préconisent de changer de mot de passe tous les mois, d'utiliser un mot de passe constitué par une suite alphanumérique ne représentant pas un mot connu ou familier, et de ne pas répertorier ce mot de passe. Très rares sont ceux qui suivent ces instructions, d'où la fragilité sécuritaire de ce procédé.

On connaît aussi les systèmes d'authentification basés sur une infrastructure à clefs publiques (PKI). Ces solutions utilisent des lois mathématiques à base de chiffres premiers et offrent une très grande robustesse sécuritaire.

Elles présentent néanmoins l'inconvénient de nécessiter une organisation lourde (directory, génération de certificat, mécanismes logiciel propriétaires) et sont basées sur l'utilisation de module type carte à puce pour sécuriser le stockage de la clef secrète. Ces solutions sont généralement chères et difficiles à déployer.

La biométrie offre une solution alternative d'authentification robuste mais coûteuse et qui pose des problèmes d'ergonomie et de déploiement.

Il existe enfin plusieurs solutions marginales qui se basent sur la possession d'un module personnel et unique que l'utilisateur met en oeuvre pour s'authentifier, ce module générant alors un code reconnu par le serveur de l'entreprise.

Ces solutions sont basées sur l'utilisation d'un module électronique personnel qui génère un code que doit saisir l'utilisateur pour s'authentifier.

Ces solutions ont l'inconvénient d'être à la fois coûteuses (matériel et licence) et de nécessiter la possession d'un module spécifique sans lequel on ne peut être authentifié.

Un autre example peut être trouvé dans le document US 2003/159068 (HALPIN EAMUS JAMES) 21 AOÛT 2003 (21-8-2003).

L'invention permet de palier les inconvénients précités en proposant un procédé et un dispositif d'authentification particulièrement simples à mettre en oeuvre.

A cet effet, l'invention concerne un procédé d'authentification de l'utilisateur d'un terminal connecté à un réseau de type Internet, ce procédé comportant les étapes suivantes :
- établissement d'un canal de communication, dans un réseau de téléphonie mobile sécurisé, entre un équipement portable de cet utilisateur, situé à proximité du terminal, et une unité d'authentification connectée au réseau de type Internet ;
- téléchargement, par le terminal, via le réseau de type Internet, d'un code numérique à partir de l'unité d'authentification, précitée ;
- envoi, par l'équipement portable, via le canal de communication mobile, à destination de l'unité d'authentification, d'un signal sonore généré par le terminal, à partir dudit code numérique, et
- authentification de l'utilisateur, à partir:
   - du signal sonore reçu, via le canal de communication mobile, et
   - d'un identifiant de l'équipement portable.

Ce procédé d'authentification est ainsi particulièrement facile d'utilisation car il suffit à l'utilisateur d'établir une communication de téléphonie mobile, avec l'unité d'authentification, et de placer son équipement portable à proximité du terminal pour s'authentifier.

Le procédé d'authentification selon l'invention repose d'une part sur la sécurité du réseau de téléphonie mobile sécurisé et, d'autre part, sur le fait que l'équipement portable est un équipement personnel de l'utilisateur.

En effet, lorsque l'unité d'authentification reçoit le signal sonore via le canal de communication mobile, il vérifie que celui-ci a été transmis à partir de l'équipement portable personnel d'un utilisateur qui se situait, nécessairement, à proximité du terminal ayant reçu le code numérique.

Après cette vérification, l'unité d'authentification peut, par exemple, transmettre le numéro de téléphone de cet équipement portable au serveur d'une entreprise qui autorise ou refuse l'accès au propriétaire de cet équipement portable.

Préférentiellement, l'identifiant utilisé par l'unité d'authentification est le numéro de téléphone du téléphone mobile de l'utilisateur.

Ainsi, le procédé d'authentification, selon l'invention, permet d'autoriser/refuser l'accès à un serveur d'entreprise à un utilisateur sur la simple connaissance de son numéro de téléphone portable.

Lorsque le réseau de téléphonie mobile sécurisé met en oeuvre la norme GSM, l'identifiant IMEI de l'équipement portable peut aussi être utilisé, ou tout autre identifiant unique.

Préférentiellement, le procédé d'authentification selon l'invention comporte une étape de création à partir du code numérique précité d'un fichier audionumérique adapté à s'exécuter automatiquement sur le terminal pour générer le signal sonore.

Ce fichier audionumérique peut, par exemple, être un fichier au format .WAV ou de format MP3.

Cette caractéristique permet avantageusement de simplifier encore le procédé d'authentification selon l'invention, car il suffit, à l'utilisation, de placer son équipement mobile à proximité d'un haut-parleur du terminal pour transmettre, à l'unité d'authentification, le signal sonore généré à partir du code numérique.

Dans un mode préféré de réalisation, l'unité d'authentification échantillonne le signal sonore reçu et compare le résultat de l'échantillonnage avec une copie du code numérique mémorisée par l'unité d'authentification.

Dans un mode préféré de réalisation de l'invention, le signal sonore utilisé est une séquence de codes DTMF.

A cet effet, le code numérique peut être constitué par une séquence de chiffres, l'unité d'authentification étant adaptée à créer un fichier audionumérique adapté à générer automatiquement une phrase sonore correspondant à cette séquence de codes DTMF.

Lorsque le ficher audionumérique est reçu par le terminal, celui-ci s'exécute automatiquement pour émettre la phrase sonore précitée, cette phrase sonore étant générée par un haut-parleur du terminal et envoyée par le canal de communication du réseau de téléphonie mobile sécurisé à l'unité d'authentification qui peut vérifier, par exemple par échantillonnage, que le signal sonore reçu par GSM correspond bien à la séquence de codes DTMF d'origine.

Dans un mode préféré de réalisation, l'unité d'authentification génère aléatoirement le code numérique avant son téléchargement par le terminal.

Ce code numérique est ensuite détruit soit après l'expiration d'un délai prédéterminé, typiquement de l'ordre de quelques secondes, soit après l'authentification proprement dite.

Ainsi, lorsque l'unité d'authentification reçoit le signal sonore en provenance de l'équipement portable, elle vérifie si ce signal sonore correspond au code numérique ayant permis la création de fichier audionumérique envoyé à destination du terminal.

Préférentiellement, ce code numérique est détruit après vérification ou après un délai prédéterminé.

Cette caractéristique permet de renforcer considérablement la sécurité du procédé d'authentification selon l'invention car même si le signal sonore était enregistré frauduleusement, cet enregistrement serait sans effet après l'expiration du délai prédéterminé précité.

Dans un mode de réalisation préféré, le procédé d'authentification selon l'invention comporte après l'étape d'authentification, une étape d'envoi, par l'unité d'authentification, d'un SMS à destination de l'équipement portable, ce SMS comportant la date et le résultat de l'étape d'authentification.

Ainsi, le propriétaire de l'équipement portable reçoit un SMS après chaque tentative d'authentification, que celle-ci ait réussi ou non.

L'invention vise aussi un système d'authentification dans un réseau de type Internet, caractérisé en ce qu'il comporte :
- des moyens d'établissement d'un canal de communication, dans un réseau de téléphonie mobile sécurisé, avec un équipement portable;
- des moyens d'envoi, à un terminal relié audit réseau de type Internet, d'un code numérique ;
- des moyens de réception, en provenance de cet équipement portable, d'un signal sonore généré par le terminal à partir du code numérique, via ledit canal de communication mobile ; et
- des moyens d'authentification de l'utilisateur de cet équipement portable, en fonction :
   - du signal sonore reçu via le canal de communication mobile ; et
   - d'un identifiant de cet équipement portable.

Les avantages particuliers du système d'authentification étant identiques à ceux du procédé décrit précédemment, ils ne seront pas rappelés ici.

D'autres aspects et avantages de la présente invention apparaîtront plus clairement à la lecture de la description du mode particulier de réalisation qui va suivre, cette description étant donnée uniquement à titre d'exemple non limitatif et faite en référence aux dessins annexés sur lesquels :
- la figure 1 représente un système d'authentification conforme à l'invention dans un exemple préféré de scénario d'utilisation ;
- la figure 2 représente les principales étapes d'un procédé d'authentification selon l'invention dans un mode préféré de réalisation ; et
- la figure 3 représente, de façon détaillée, un dispositif d'authentification selon l'invention dans un mode préféré de réalisation.

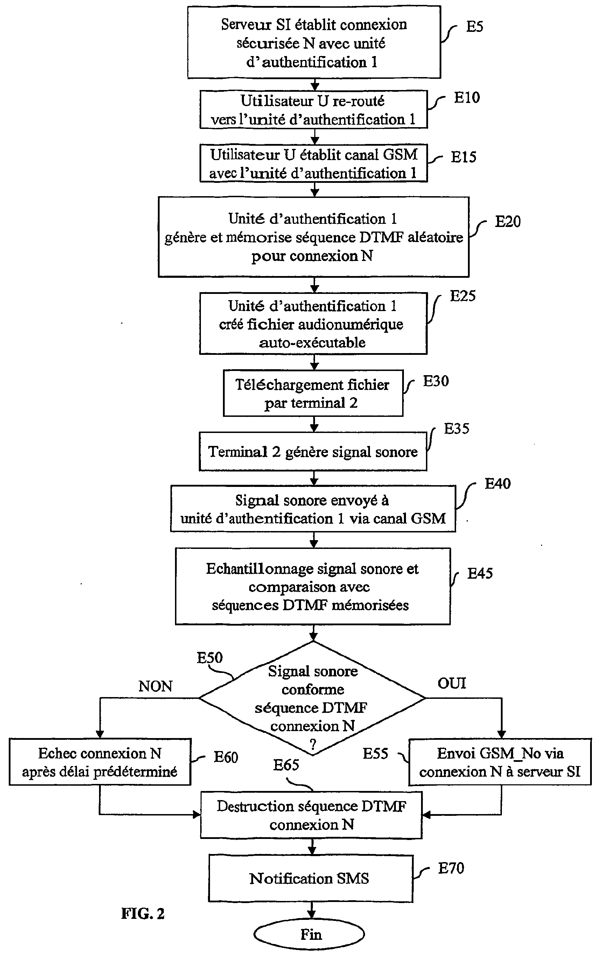

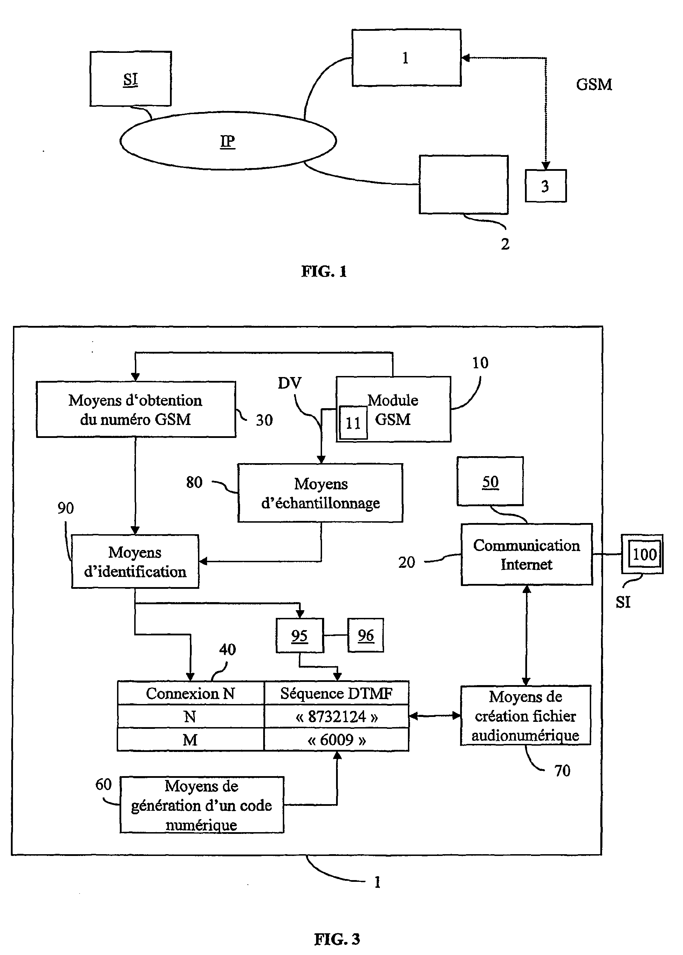

La figure 1 représente un système d'authentification dans un scénario préféré de mise en oeuvre de l'invention.

Nous supposerons dans la suite de la description que ce système d'authentification est utilisé pour authentifier un utilisateur désirant accéder à un serveur Sl à partir du terminal distant 2 (par exemple un ordinateur personnel de type PC).

Nous supposerons également que l'utilisateur U du terminal distant 2 possède un équipement portable 3. Dans l'exemple décrit ici, cet équipement portable est un téléphone cellulaire conforme à la norme GSM dont le numéro de GSM_No.

Dans le scénario d'utilisation décrit ici, lorsque l'utilisateur U se connecte au serveur SI à partir du terminal 2, par exemple en saisissant l'adresse de ce serveur SI au moyen d'un navigateur HTML connu de l'homme du métier, il est re-routé vers une unité d'authentification 1 d'un système d'authentification conforme à l'invention et reçoit, sur l'écran du terminal 2, une page d'accueil 50 en provenance de cette unité d'authentification 1.

Cette page d'accueil 50 comporte un message invitant l'utilisateur U à composer le numéro de téléphone GSM de l'unité d'authentification 1.

En composant ce numéro sur son équipement portable 3, l'utilisateur U établit, de façon connue, un canal de communication mobile sécurisé avec l'unité d'authentification 1.

Conformément à l'invention, l'unité d'authentification 1 est adaptée à obtenir le numéro GSM_No de l'équipement portable 3 situé à proximité du terminal distant 2 en vérifiant qu'un signal sonore reçu en provenance de cet équipement portable 3 a été généré par le terminal 2 à partir d'un fichier audionumérique créé par l'unité d'authentification 1.

Une fois obtenu par l'unité d'authentification 1, le numéro de téléphone GSM_No est transmis au serveur SI qui, le cas échéant, authentifie l'utilisateur de l'équipement portable 3 et lui autorise l'accès au serveur SI.

La figure 2 représente les principales étapes E5 à E70 d'un procédé d'authentification conforme à l'invention dans un mode préféré de réalisation.

Dans le mode de réalisation décrit ici, lorsque l'utilisateur U cherche à accéder à un serveur Sl à partir d'un terminal distant 2, le serveur SI génère, au cours d'une première étape E5, un numéro N de connexion sécurisée, ce numéro identifiant de manière unique la connexion entre le terminal distant 2 et le serveur Sl.

Au cours de cette même étape E5, le serveur Sl établit une communication sécurisée avec une unité d'authentification 1 conforme à l'invention et communique l'identifiant N de connexion sécurisée à l'unité d'authentification 1.

Au cours d'une étape suivante E10, l'utilisateur U est re-routé automatiquement vers une page d'accueil 50 de l'unité d'authentification 1.

Sur cette page d'accueil figure un numéro de téléphone GSM qui s'affiche sur l'écran du terminal distant 2.

Ce numéro de téléphone GSM correspond, selon l'invention, à un numéro de téléphone de l'unité d'authentification 1.

Ainsi, l'utilisateur U souhaitant s'authentifier, compose ce numéro de téléphone GSM précité au cours d'une étape E15, au moyen de son équipement portable 3, établissant ainsi un canal de communication mobile sécurisé avec l'unité d'authentification 1.

Cette étape d'appel E15 est suivie par une étape E20 au cours de laquelle l'unité d'authentification 1 génère aléatoirement un code numérique. Dans l'exemple décrit ici, ce code numérique est une séquence de codes DTMF, par exemple la séquence 8, 4, 3, 2, 1, 2, 4.

Au cours de cette même étape E20, l'unité d'authentification 1 associe, par exemple dans un fichier 40, ce code numérique avec l'identifiant de connexion unique N.

L'étape E20 de génération et de mémorisation de la séquence de codes DTMF est suivie par une étape E25 au cours de laquelle l'unité d'authentification 1 crée un fichier audionumérique auto-exécutable à partir du code numérique généré au cours de l'étape E20.

Dans le mode préféré de réalisation décrit ici, le fichier audionumérique est au format .WAV.

Ainsi, dans l'exemple décrit ici, on crée, au cours de l'étape E25, un fichier audionumérique au format .WAV dont l'exécution permet de générer les codes DTMF 8, 4, 3, 2, 1, 2, 4 les uns à la suite des autres.

Une fois ce fichier audionumérique créé, l'unité d'authentification 1 envoie, via le canal GSM sécurisé établi à l'étape E10, un message à l'utilisateur U de l'équipement portable 3, l'invitant à cliquer sur une zone, préférentiellement une icône, de la page d'accueil 50, à partir du terminal distant 2.

Lorsque l'utilisateur clique sur cette zone, cela entraîne, le téléchargement (étape E30) du fichier audionumérique au format .WAV précité, par le terminal 2.

L'étape E30 de téléchargement est suivie par une étape E35 au cours de laquelle le fichier auto-exécutable s'exécute automatiquement sur le terminal 2 générant ainsi un signal sonore, à savoir la séquence DTMF 8, 4, 3, 2, 1, 2, 4 aléatoire générée précédemment au cours de l'étape de génération E20.

Si l'utilisateur U approche suffisamment le microphone de son équipement portable 3 du haut-parleur du terminal 2, la séquence de codes DTMF émise par le haut-parleur du terminal 2 est envoyée, au cours d'une étape d'envoi E40, à l'unité d'authentification 1 par le canal GSM sécurisé ouvert à l'étape E15.

Au cours de cette même étape, ce signal sonore est reçu par l'unité d'authentification 1.

Ce signal sonore est ensuite échantillonné au cours de l'étape suivante E45 et comparé avec l'ensemble des codes numériques (à savoir ici les séquences DTMF ("8732124", "6009")), mémorisés dans le fichier 40 de l'unité d'authentification 1.

Cette étape de comparaison est connue de l'homme du métier. Elle est en particulier utilisée dans les serveurs vocaux pour identifier un code DTMF saisi au clavier d'un téléphone appelant ce serveur vocal.

L'étape E45 d'échantillonnage et de comparaison est suivie par un test d'identification E50 dont le résultat est positif si le signal sonore reçu et échantillonné au cours de l'étape E50 est identique au code numérique (8732124) mémorisé dans le fichier 40 et associé à l'identifiant de connexion sécurisée N.

Dans ce cas, ce test E50 est suivi par une étape E55 au cours de laquelle l'unité d'authentification 1 envoie le numéro GSM_No de l'équipement portable 3 au serveur SI via la connexion sécurisée N.

Dans le cas contraire, si aucun signal sonore correspondant à la séquence DTMF associée à la connexion sécurisée N n'est reçu après un délai prédéterminé, le résultat du test E50 d'identification est négatif et l'unité d'authentification 1 transmet, via la connexion sécurisée d'identifiant N, au serveur Sl, une information représentative d'un échec d'authentification.

Quoi qu'il en soit, les étapes E55 et E60 d'envoi d'un résultat d'identification au serveur Sl sont suivies par une étape E65 de destruction de la séquence DTMF générée au cours de l'étape E20.

Cette étape E65 de destruction permet de s'assurer que le code numérique aléatoire généré au cours de l'étape E20 n'est pas ré-utilisé, ce qui renforce la sécurité du procédé d'authentification selon l'invention.

Préférentiellement, ce code numérique est également détruit à échéance d'un délai prédéterminé compté à partir de sa génération (étape E20).

L'étape E65 de destruction est suivie par une étape E70 au cours de laquelle l'unité d'authentification 1 envoie un SMS à destination de l'équipement portable 3, ce SMS comportant la date et le résultat de l'étape E45 de comparaison précitée.

Cette étape E70 de notification termine le procédé d'authentification dans le mode de réalisation décrit ici.

La figure 3 représente un système d'authentification 1 conforme à l'invention dans un mode préféré de réalisation.

Ce système d'authentification comporte principalement une unité d'authentification 1.

Cette unité d'authentification 1 comporte un module 10 apte à recevoir un appel conformément à la norme GSM, ci-après appelé module GSM 10. Ce module GSM 10 permet à l'unité d'authentification 1 d'établir un canal de communication mobile sécurisé avec un équipement portable 3.

Dans un autre mode de réalisation, le module GSM peut être remplacé par un module de communication conforme à une autre norme de téléphonie mobile sécurisée, par exemple conforme au protocole UMTS ou CDMA.

L'unité d'authentification 1 comporte également un module de communication Internet 20. Ce module de communication Internet 20 comporte plus précisément des moyens matériels et logiciels pour communiquer avec un autre équipement du réseau Internet, à savoir notamment une carte réseau et des moyens logiciels mettant en oeuvre un protocole de communication du type TCP/IP.

Dans le mode de réalisation décrit ici, lorsqu'un utilisateur U accède au serveur Sl à partir d'un terminal 2, il est re-routé vers une page d'accueil 50 hébergée par l'unité d'authentification 1, cette page d'accueil 50 comportant un message invitant l'utilisateur U du terminal 2 à appeler, au moyen d'un téléphone mobile GSM 3, le module GSM 10 de cette unité d'authentification 1.

L'unité d'authentification 1 comporte également des moyens 30 adaptés à obtenir, à partir d'une trame GSM reçue par le module GSM 10, le numéro de téléphone d'un équipement portable 3 avec lequel il est en communication.

Ainsi, lorsque l'utilisateur U appelle le module GSM du serveur d'authentification 10, les moyens d'obtention 30 obtiennent le numéro GSM_No du téléphone mobile GSM 3.

L'unité d'authentification 1 décrit ici comporte également un fichier 40 dont :
- une première colonne comporte des identifiants N, M de connexions sécurisées établies entre des serveurs Sl utilisant un procédé d'authentification conforme à l'invention et l'unité d'authentification 1 ; et
- une deuxième colonne comportant des codes numériques (à savoir dans l'exemple décrit ici, des codes DTMF) associés aux identifiants N, M précités.

L'unité d'authentification 1 comporte à cet effet des moyens de génération d'un code numérique aléatoire (ici une séquence de codes DTMF) et de mémorisation de ce code numérique aléatoire dans la dernière colonne du fichier 40.

Les moyens 60 de génération d'une séquence DTMF de l'unité d'authentification 1 sont connus et ne seront pas décrits ici.

On supposera dans l'exemple décrit ici que, consécutivement à l'appel de l'équipement portable 3, les moyens 60 de génération génèrent et mémorisent la séquence DTMF 8, 7, 3, 2, 1, 2, 4 dans la deuxième colonne du fichier 40 en vis-à-vis de l'identifiant N de la connexion sécurisée établie entre le serveur SI et l'unité d'authentification 1.

L'unité d'authentification 1 comporte également des moyens 70 de création d'un fichier audionumérique auto-exécutable à partir d'une séquence de codes DTMF.

Ainsi, dans l'exemple décrit ici, les moyens 70 de création d'un fichier sont adaptés à créer un fichier audionumérique au format .WAV qui, lorsqu'il s'exécute, génère la séquence DTMF 8, 7, 3, 2, 1, 2, 4.

Lorsque l'utilisateur du terminal 2 clique sur une zone prédéterminée de la page d'accueil 50, les moyens 20 de communication Internet permettant le téléchargement de fichier audionumérique .WAV précité par le terminal distant 2.

Comme décrit précédemment, le terminal distant 2 émet automatiquement, sur réception de ce fichier, la séquence DTMF 8, 7, 3, 2, 1, 2, 4 par son haut-parleur.

L'équipement portable 3 de l'utilisateur du terminal 2 étant situé à proximité de ce haut-parleur, le code DTMF 8, 7, 3, 2, 1, 2, 4 est envoyé via le canal GSM sécurisé précédemment établi, au module GSM 10 de l'unité d'authentification 1.

Ces données vocales DV sont transmises par le module GSM 10, à des moyens d'échantillonnage 80 de l'unité d'authentification 1.

Ces moyens d'échantillonnage 80 sont plus particulièrement adaptés à reconnaître, dans les données vocales DV reçues par le module GSM 10, des fréquences caractéristiques de codes DTMF.

Ainsi, si la séquence des codes DTMF "8732124" est reçue par le module GSM 10, les moyens d'échantillonnage 80 sont adaptés à fournir en sortie successivement la séquence de chiffres 8, 7, 3, 2, 1, 2 et 4.

Ces chiffres sont fournis par les moyens d'échantillonnage 80, à des moyens d'identification 90 qui sont adaptés à déterminer, le cas échéant, l'identifiant N, M de connexion sécurisée mémorisée dans la première colonne du fichier 40 en vis-à-vis de la séquence DTMF fournie par les moyens d'échantillonnage 80.

Si tel est le cas, les moyens d'identification 90 envoient, au serveur Sl, le numéro GSM_No, obtenu par les moyens 30 d'obtention d'un numéro de l'équipement portable 3, ayant transmis la séquence DTMF "8732124" à l'unité d'authentification 1 .

Sur réception de ce numéro GSM_No, le serveur SI est apte à authentifier, avec des moyens d'authentification 100, l'utilisateur U du terminal distant 2, comme étant le propriétaire de l'équipement portable 3.

En pratique, ce moyens d'authentification 100 vérifient, dans une base de données du serveur Sl non représentée ici, si le propriétaire d'un équipement portable 3 est autorisé ou non à accéder à ce serveur SI.

Les moyens d'identification 90 sont aussi adaptés à envoyer, au serveur Sl, via la connexion sécurisée N, une information représentative d'un échec d'authentification lorsqu'aucun signal sonore n'est reçu ou s'il ne correspond pas à la séquence DTMF associée à l'identifiant N de cette connexion sécurisée.

Par ailleurs, le module GSM 10 de l'unité d'authentification 1 comporte des moyens 11 d'envoi d'un SMS à destination d'un équipement portable 3. Ces moyens d'envoi d'un SMS sont connus et ne seront pas décrits ici.

Ils sont en particulier adaptés à envoyer un SMS comportant la date et le résultat de l'étape E45 de comparaison réalisée par les moyens 90 d'identification décrits précédemment.

L'unité 1 d'authentification décrite ici comporte également des moyens 95 de destruction de la séquence DTMF mémorisée dans le fichier 40.

Ces moyens de destruction 95 sont en particulier adaptés à détruire la séquence de codes DTMF précitée après un délai prédéterminé compté à partir de la génération de la séquence DTMF par les moyens de génération DTMF 60.

A cet effet, les moyens de destruction 95 coopèrent avec une horloge 96.

Les moyens de destruction 95 sont aussi adaptés à détruire la séquence DTMF sur ordre des moyens d'identification 90, notamment lorsque ceux-ci ont terminé le test d'identification E50 décrit précédemment.

En référence aux figures 1 à 3, nous avons décrit des modes de réalisation préférés du procédé et du système d'auth entification selon l'invention dans lesquels le code numérique utilisé pour l'authentification est une séquence DTMF.

Bien entendu, d'autres codes numériques peuvent être utilisés et, notamment, une signature, inaudibles, dissimulés dans une musique ou un message audio, selon la technique dite de "tatouage" (en anglais "watermarking").

Quoi qu'il en soit, ces différentes méthodes permettent de vérifier, de façon certaine, qu'un signal sonore reçu, via un canal de communication mobile sécurisé avait été obtenu à partir d'un code numérique mémorisé par le dispositif d'authentification selon l'invention.

## Revendications

1. Procédé d'authentification de l'utilisateur (U) d'un terminal (2) connecté à un réseau de type Internet, **caractérisé en ce qu'**il comporte les étapes suivantes :
- établissement (E15) d'un canal de communication, dans un réseau de téléphonie mobile sécurisé (GSM), entre un équipement portable (3) dudit utilisateur (U) situé à proximité du terminal (2), et une unité d'authentification (1) connectée audit réseau de type Internet ;
- téléchargement (E30), par le terminal (2), via ledit réseau de type Internet, d'un code numérique à partir de ladite unité d'authentification (1) ;
- envoi (E40), par ledit équipement portable (3), via ledit canal de communication mobile, à destination de ladite unité d'authentification (1) d'un signal sonore généré (E35) par le terminal (2), à partir dudit code numérique ; et
- authentification dudit utilisateur (U), à partir :
- du signal sonore reçu (E40), via ledit canal de communication mobile (GSM) ; et
- d'un identifiant (GSM_No) dudit équipement portable (3).

2. - Procédé d'authentification selon la revendication 1, **caractérisé en ce que** ledit équipement portable (3) étant un téléphone mobile, ledit identifiant de cet équipement portable (3) est son numéro de téléphone.

3. - Procédé d'authentification selon la revendication 1, **caractérisé en ce que** ledit équipement portable (3) étant conforme à la norme GSM, ledit identifiant de cet équipement portable est son code IMEI.

4. - Procédé d'authentification selon l'une quelconque des revendications 1 à 3, **caractérisé en ce qu'**il comporte la création d'un fichier audionumérique (.WAV) à partir dudit code numérique, ledit fichier audionumérique étant adapté à s'exécuter automatiquement sur le terminal (2) pour générer ledit signal sonore.

5. - Procédé d'authentification selon l'une quelconque des revendications 1 à 4, **caractérisé en ce que** pour procéder à ladite authentification, ladite unité d'identification (1) :
- échantillonne (E45) le signal sonore reçu par GSM (E40); et
- compare (E45) le résultat dudit échantillonnage avec une copie dudit code numérique mémorisée par ladite unité d'authentification (1).

6. - Procédé d'authentification selon l'une quelconque des revendications 1 à 5, **caractérisé en ce que** ledit signal sonore est une séquence de codes DTMF.

7. - Procédé d'authentification selon l'une quelconque des revendications 1 à 6, **caractérisé en ce qu'**il comporte en outre une étape (E20) de génération aléatoire dudit code numérique avant ladite étape (E30) de téléchargement et une étape de destruction (E70) dudit code numérique après ladite étape d'authentification ou après un délai prédéterminé.

8. - Procédé d'authentification selon l'une quelconque des revendications 5 à 8, **caractérisé en ce qu'**il comporte en outre, après ladite étape d'authentification :
- une étape d"envoi (E75), par ladite unité d'authentification (1), d'un SMS à destination dudit équipement portable (3), ledit SMS comportant la date et le résultat de ladite étape de comparaison (E45).

9. - Système d'authentification relié à un réseau de type Internet, **caractérisé en ce qu'**il comporte :
- des moyens (10) d'établissement d'un canal de communication, dans un réseau de téléphonie mobile sécurisé (GSM), avec un équipement portable (3) ;
- des moyens (20) d'envoi, à un terminal (2) relié audit réseau de type Internet, d'un code numérique ;
- des moyens (10) de réception, en provenance dudit équipement portable (3), d'un signal sonore généré par le terminal (2) à partir dudit code numérique, via ledit canal de communication mobile (GSM) ; et
- des moyens (100) d'authentification de l'utilisateur (U) dudit équipement portable (3), en fonction :
- dudit signal sonore reçu via ledit canal de communication mobile (GSM) ; et
- d'un identifiant (GSM_No) dudit équipement portable (3).

10. - Système d'authentification selon la revendication 9, **caractérisé en ce que** ledit équipement portable (3) étant un téléphone portable, lesdits moyens d'authentification prennent en compte l'identifiant (GSM_No) dudit équipement portable constitué par son numéro de téléphone.

11. - Système d'authentification selon la revendication 9, **caractérisé en ce que** ledit équipement portable (3) étant conforme à la norme GSM, lesdits moyens de décision sont adaptés à autoriser ou refuser l'accès en prenant en compte l'identifiant dudit équipement portable constitué par son code IMEI.

12. - Système d'authentification selon l'une quelconque des revendications 9 à 11, **caractérisé en ce qu'**il comporte en outre des moyens (70) de création d'un fichier audionumérique à partir dudit code numérique, ledit fichier audionumérique étant adapté à s'exécuter automatiquement sur le terminal (2) pour générer ledit signal sonore.

13. - Système d'authentification selon l'une quelconque des revendications 9 à 12, **caractérisé en ce qu'**il comporte en outre :
- des moyens (80) d'échantillonnage dudit signal sonore ; et
- des moyens (90) d'identification aptes à comparer le résultat dudit échantillonnage avec une copie dudit code numérique mémorisée par ladite unité d'authentification (1).

14. - Système d'authentification selon l'une quelconque des revendications 9 à 13, **caractérisé en ce que** ledit signal sonore est une séquence de codes DTMF.

15. - Système d'authentification selon l'une quelconque des revendications 9 à 14, **caractérisé en ce qu'**il comporte en outre :
- des moyens (60) de génération aléatoire dudit code numérique ; et
- des moyens (95) de destruction adaptés à détruire ledit code numérique sur ordre desdits moyens d'identification (90) ou après un délai prédéterminé.

16. - Système d'authentification selon l'une quelconque des revendications 13 à 15, **caractérisé en ce qu'**il comporte en outre des moyens (11) de notification d'un SMS à destination dudit équipement portable (3), ledit SMS comportant la date et le résultat obtenus par les moyens d'identification (90).

## Claims

1. A method of authenticating the user (U) of a terminal (2) connected to an Internet type network, the method being **characterised in that** it comprises the following steps:
· setting up (E15) a communications channel in a secure mobile telephony network (GSM) between mobile equipment (3) of said user (U) situated close to the terminal (2) and an authentication unit (1) connected to said Internet type network;
· the terminal (2) downloading (E30) via said Internet type network a digital code from said authentication unit (1);
· said mobile equipment (3) sending (E40) a sound signal via said mobile communications channel to said authentication unit (1), the sound signal being generated (E35) by the terminal (2) on the basis of said digital code; and
· authenticating said user (U) on the basis:
· of the sound signal received (E40) via said mobile communications channel (GSM); and
· of an identifier (GSM_No) of said mobile equipment (3).

2. An authentication method according to claim 1, **characterised in that** said mobile equipment (3) is a mobile telephone and said identifier of said mobile equipment (3) is its telephone number.

3. An authentication method according to claim 1, **characterised in that** said mobile equipment (3) complies with the GSM standard, and said identifier of said mobile equipment is its IMEI code.

4. An authentication method according to any one of claims 1 to 3, **characterised in that** it includes creating a digital audio file (.WAV) from said digital code, said digital audio file being adapted to run automatically on the terminal (2) in order to generate said sound signal.

5. An authentication method according to any one of claims 1 to 4, **characterised in that** in order to proceed with said authentication, said identification unit (1):
· samples (E45) the sound signal received by GSM (E40); and
· compares (E45) the result of said sampling with a copy of said digital code stored by said authentication unit (1).

6. An authentication method according to any one of claims 1 to 5, **characterised in that** said sound signal is a DTMF code sequence.

7. An authentication method according to any one of claims 1 to 6, **characterised in that** it further comprises a step (E20) of randomly generating said digital code prior to said downloading step (E30), and a destruction step (E70) of destroying said digital code after said authentication step or after a predetermined time period.

8. An authentication method according to any one of claims 5 to 8, **characterised in that**, after said authentication step, it further comprises:
· a step of said authentication unit (1) sending (E75) an SMS to said mobile equipment (3), said SMS comprising the date and the result of said comparison step (E45).

9. An authentication system connected to an Internet type network, the system being **characterised in that** it comprises:
· means (10) for establishing a communications channel with mobile equipment (3) via a secure mobile telephone network (GSM);
· send means (20) for sending a digital code to a terminal (2) connected to said Internet type network;
· receive means (10) for receiving via said mobile communications channel (GSM) a sound signal from said mobile equipment (3), the sound signal being generated by the terminal (2) on the basis of said digital code; and
· authentication means (100) for authenticating the user (U) of said mobile equipment (3) as a function:
· of said sound signal received via said mobile communications channel (GSM); and
· of an identifier (GSM_No) of said mobile equipment (3).

10. An authentication system according to claim 9, **characterised in that** said mobile equipment (3) is a mobile telephone and said authentication means take account of the identifier (GSM_No) of said mobile equipment as constituted by its telephone number.

11. An authentication system according to claim 9, **characterised in that** said mobile equipment (3) complies with the GSM standard, and said decision means are adapted to authorize or refuse access by taking account of the identifier of said mobile equipment as constituted by its IMEI code.

12. An authentication system according to any one of claims 9 to 11, **characterised in that** it further comprises means (70) for creating a digital audio file on the basis of said digital code, said digital audio file being adapted to run automatically on the terminal (2) to generate said sound signal.

13. An authentication system according to any one of claims 9 to 12, **characterised in that** it further comprises:
· means (80) for sampling said sound signal; and
· identification means (90) suitable for comparing the result of said sampling with a copy of said digital code stored by said authentication unit (1).

14. An authentication system according to any one of claims 9 to 13, **characterised in that** said sound signal is a DTMF code sequence.

15. An authentication system according to any one of claims 9 to 14, **characterised in that** it further comprises:
· means (60) for randomly generating said digital code; and
· destruction means (95) adapted to destroy said digital code on receiving an order from said identification means (90) or after a predetermined time period has elapsed.

16. An authentication system according to any one of claims 13 to 15, **characterised in that** it further comprises means (11) for sending an SMS to said mobile equipment (3), said SMS comprising the date and the result obtained by the identification means (90).

## Patentansprüche

1. Verfahren zur Authentifizierung eines Anwenders (U) eines Endgerätes (2), das mit einem Netzwerk vom Typ Internet verbunden ist, **dadurch gekennzeichnet, daß** es die folgende Schritte umfaßt:
- Aufbau (E15) eines Kommunikationskanals in einem gesicherten Mobilfunknetz (GSM) zwischen einer tragbaren Ausrüstung (3) des Anwenders (U), angeordnet in der Nähe des Endgerätes (2), und einer Authentifizierungseinheit (1), die mit dem Netzwerk vom Typ Internet verbunden ist,
- Download (E30) eines digitales Codes aus der Authentifizierungseinheit (1) über das Netzwerk vom Typ Internet durch das Endgerät (2),
- Senden (E40) durch die tragbare Ausrüstung (3) über den mobilen Kommunikationskanal zum Ziel der Authentifizierungseinheit (1) eines akustischen Signals, das durch das Endgerät (2) aus dem digitalen Code erzeugt ist (E35), und
- Authentifizierung des Anwenders (U) aus:
- dem über den mobilen Kommunikationskanal (GSM) empfangenen akustischen Signal (E40) und
- einer Identifizierung (GSM_Nr.) der tragbaren Ausrüstung (3).

2. Verfahren zur Authentifizierung nach Anspruch 1, **dadurch gekennzeichnet, daß** die tragbare Ausrüstung (3) ein Mobiltelefon ist und die Identifizierung dieser tragbaren Ausrüstung (3) seine Telefonnummer ist.

3. Verfahren zur Authentifizierung nach Anspruch 1, **dadurch gekennzeichnet, daß** die Identifizierung dieser tragbaren Ausrüstung sein IMEI-Code ist, wobei die tragbare Ausrüstung (3) gemäß der GSM-Norm ist.

4. Verfahren zur Authentifizierung nach einem der Ansprüche 1 bis 3, **dadurch gekennzeichnet, daß** es die Erzeugung einer audiodigitalen Datei (.WAV) aus dem digitalen Code umfaßt, wobei die audiodigitale Datei geeignet ist, sich automatisch auf dem Endgerät (2) auszuführen, um das akustische Signal zu erzeugen.

5. Verfahren zur Authentifizierung nach einem der Ansprüche 1 bis 4, **dadurch gekennzeichnet, daß**, um die Authentifizierung vorzunehmen, die Identifizierungseinheit (1):
- das per GSM (E40) empfangene akustische Signal abtastet (E45) und
- das Ergebnis der Abtastung mit einer Kopie des digitalen Codes vergleicht (E45), der durch die Authentifizierungseinheit (1) gespeichert ist.

6. Verfahren zur Authentifizierung nach einem der Ansprüche 1 bis 5, **dadurch gekennzeichnet, daß** das akustische Signal eine Sequenz von DTMF-Codes ist.

7. Verfahren zur Authentifizierung nach einem der Ansprüche 1 bis 6, **dadurch gekennzeichnet, daß** es außerdem einen Schritt (E20) zur zufälligen Erzeugung des digitales Codes vor dem Schritt (E30) zum Downloaden umfaßt und einen Schritt zur Zerstörung (E70) des digitalen Codes nach dem Schritt zur Authentifizierung oder nach einem vorbestimmten Zeitraum.

8. Verfahren zur Authentifizierung nach einem der Ansprüche 5 bis 8, **dadurch gekennzeichnet, daß** es außerdem nach dem Schritt zur Authentifizierung umfaßt:
- einen Schritt zum Versenden (E75) durch die Authentifizierungseinheit (1) von einer SMS zu der tragbaren Ausrüstung (3), wobei die SMS das Datum und das Ergebnis des Schrittes zum Vergleich (E45) umfaßt.

9. System zur Authentifizierung, verbunden mit einem Netz vom Typ Internet, **dadurch gekennzeichnet, daß** es umfaßt:
- Mittel (10) zum Aufbau eines Kommunikationskanals in einem gesicherten Mobilfunknetz (GSM) mit einer tragbaren Ausrüstung (3),
- Mittel (20) zum Senden von einem digitalen Code zu einem Endgerät (20), das mit dem Netzwerk vom Typ Internet verbunden ist
- Mittel (10) zum Empfangen eines Schallsignals, das durch das Endgerät (2) aus dem digitalen Code erzeugt ist, über den mobilen Kommunikationskanal (GSM) in der tragbaren Ausrüstung (3), und
- Mittel (100) zur Authentifizierung des Anwenders (U) der tragbaren Ausrüstung (3), in Abhängigkeit:
- des akustischen Signals, das über den mobilen Kommunikationskanal (GSM) empfangen ist; und
- einer Identifizierung (GSM_Nr.) der tragbaren Ausrüstung (3).

10. System zur Authentifizierung nach Anspruch 9, **dadurch gekennzeichnet, daß** die Mittel zur Authentifizierung die Identifizierung (GSM_Nr.) der tragbaren Ausrüstung, bestehend aus ihrer Telefonnummer, berücksichtigen, wobei die tragbare Ausrüstung (3) ein Mobiltelefon ist.

11. Verfahren zur Authentifizierung nach Anspruch 9, **dadurch gekennzeichnet, daß** die Entscheidungsmittel geeignet sind, den Zugang unter Berücksichtigung der Identifizierung der tragbaren Ausrüstung, bestehend aus ihrem IMEI-Code, zuzulassen oder zu verweigern, wobei die tragbare Ausrüstung (3) gemäß der GSM-Norm ist.

12. System zur Authentifizierung nach einem der Ansprüche 9 bis 11, **dadurch gekennzeichnet, daß** es außerdem Mittel (70) zur Erzeugung einer audiodigitalen Datei (.WAV) aus dem digitalen Code umfaßt, wobei die audiodigitale Datei geeignet ist, sich automatisch auf dem Endgerät (2) auszuführen, um das akustische Signal zu erzeugen.

13. System zur Authentifizierung nach einem der Ansprüche 9 bis 12, **dadurch gekennzeichnet, daß** es außerdem umfaßt:
- Mittel (80) zum Abtasten des akustischen Signals und
- Mittel (90) zur Identifizierung, die geeignet sind, das Ergebnis der Abtastung mit einer Kopie des digitalen Codes zu vergleichen, der von der die Authentifizierungseinheit (1) gespeichert ist.

14. System zur Authentifizierung nach einem der Ansprüche 9 bis 13, **dadurch gekennzeichnet, daß** das akustische Signal eine Sequenz von DTMF-Codes ist.

15. System zur Authentifizierung nach einem der Ansprüche 9 bis 14, **dadurch gekennzeichnet, daß** es außerdem umfaßt:
- Mittel (60) zur zufälligen Erzeugung des digitalen Codes, und
- Mittel (95) zur Zerstörung, die geeignet sind, den digitalen Code auf Kommando der ldentifizierungsmittel (90) oder nach einem vorbestimmten Zeitraum zu zerstören.

16. System zur Authentifizierung nach einem der Ansprüche 13 bis 15, **dadurch gekennzeichnet, daß** es außerdem Mittel (11) zur Mitteilung einer SMS zu der tragbaren Ausrüstung (3) umfaßt, wobei die SMS das Datum und das Ergebnis umfaßt, welche durch die Identifizierungsmittel (90) erhalten sind.
